# EUROPÄISCHE PATENTSCHRIFT

(11) **EP 2 022 996 B1**
(45) Veröffentlichungstag und Bekanntmachung des Hinweises auf die Patenterteilung: **05.08.2009**
(21) Anmeldenummer: 07015363.0
(22) Anmeldetag: 06.08.2007
(51) Int. Cl.: F16D 3/74

(54) **Drehelastische Wellenkupplung**
Flexible shaft coupling
Accouplement d'arbre élastique rotatif

(43) Veröffentlichungstag der Anmeldung: 11.02.2009
(73) Patentinhaber: Centa-Antriebe Kirschey GmbH, 42781 Haan (DE)
(72) Erfinder: Kirschey, Gerhard, 42329 Wuppertal (DE)
(74) Vertreter: Ostriga, Sonnet, Wirths & Roche

(56) Entgegenhaltungen:
- DE-A1- 3 710 390
- US-A1- 2001 023 206
- US-A1- 2004 058 735
- KALPAKJIAN: "Manufacturing Engineering and Technology" 1. September 1992 (1992-09-01), ADDISON-WESLEY PUBLISHING COMPANY , READING, MASSAACHUSETTS , XP002465666 * Seite 594 - Seite 596 *

## Beschreibung

- Die Erfindung bezieht sich auf ein Verfahren zur Herstellung einer drehelastischen Wellenkupplung nach dem Oberbegriff des Anspruchs 1 und somit auf ein Herstellungsverfahren für eine segmentierte Kupplung, deren Kupplungssegmente von einem Stützring stabilisiert und zusammengehalten werden.

Segmentierte Kupplungen sind in zahlreichen Ausführungen bekannt, wozu etwa auf die DE 37 10 390 A1 verwiesen wird.

Die Segmentierung von Kupplungen hat außer bei solchen Baugrößen, die sich einteilig nicht mehr wirtschaftlich herstellen lassen, vor allem den Vorteil einer einfachen Montage der Kupplung. Man kann beispielsweise die Nabe in die Kupplung hinein verlagern, aber dennoch Gummielemente ausbauen bzw. wechseln, ohne die Maschinenteile (z.B. Motor und Generator) zuvor voneinander entfernen zu müssen.

Bei segmentierten Kupplungen ist es erforderlich, die einzelnen Segmente gegeneinander abzustützen. Dies geschieht in der Praxis mittels eines sog. Stützrings, der - wie etwa in DE 37 10 390 A1 - auch als Mitnehmerring bezeichnet wird. Solche Ringe stellen insbesondere bei großen Kupplungen aufwendige Präzisionsbauteile dar, die vor allem auch in der Herstellung kostspielig sind. Die Ringe werden herkömmlich gewalzt und müssen sodann allseits spangebend bearbeitet werden.

Der vorliegenden Erfindung liegt die Aufgabe zugrunde, eine Kupplung vorgenannter Art hinsichtlich ihres Stützrings wesentlich zu vereinfachen.

Die Erfindung löst diese Aufgabe mit den Merkmalen des Anspruchs 1 und ist dem entsprechend insbesondere dadurch gekennzeichnet, dass der Kragen des Stützrings im wesentlichen spanlos aus der Außenumfangsfläche eines im Querschnitt flachrechteckigen Ringkörpers herausgeformt ist. Damit ist die Notwendigkeit spangebender Arbeitsschritte auf ein absolutes Minimum begrenzt, wodurch sich erhebliche Einsparungen an Zeit und finanziellen Mitteln ergeben.

Eine Weiterbildung sieht vor, dass der Stützring an seinen beiden Axialseiten jeweils einen Kragen aufweist und die beiden Kragen, ausgehend von einem im wesentlichen mittigen Einschnitt in der Peripherie des Stützrings, zu beiden Seiten hin nach auswärts verformt sind. Der Einschnitt kann der im wesentlichen einzige spangebende Arbeitsschritt sein, wenn man ihn z.B. als umlaufende Nut in die Außenumfangsfläche des Ringkörpers einbringt. Gleichwohl ist es auch möglich, den Einschnitt durch Eintreiben eines Spaltwerkzeugs spanlos zu erzeugen.

Als besonders vorteilhaft wird es gemäß weiterer Ausgestaltung der Erfindung angesehen, wenn das Ausformen des wenigstens einen Kragens gegen eine Schablone mit einem einen Zentrierdurchmesser definierenden Außendurchmesser erfolgt. Hiermit ist auf einfache Weise die Maßhaltigkeit des Rings im Bereich der umgebogenen Kragen gewährleistet.

Wenn der im Querschnitt flachrechteckige Ringkörper, aus dem der Stützring geformt ist, mittels Laserschneiden aus einer Stahlblechplatte ausgeschnitten ist, ist keine oder zumindest keine wesentliche Nachbearbeitung des Rings erforderlich, da das Laserschneidverfahren die Oberflächen des zu schneidenden Werkstücks praktisch nicht angreift. Im Sinne der Erfindung ist es insgesamt möglich, die Außenflächen des Stützrings mit Ausnahme der Außenflächen des Kragens bzw. der Kragen im wesentlichen unbearbeitet zu lassen.

Im übrigen versteht sich die Erfindung am besten anhand eines in den Zeichnungen dargestellten Ausführungsbeispiels. Darin zeigen:
- Fig. 1: einen Halblängsschnitt durch eine elastische Wellenkupplung mit daran angeschlossener Nabe,
- Fig. 2: einen Querschnitt durch einen ringscheibenförmigen Rohling als Ausgangsmaterial für einen Stützring,
- Fig. 3: einen Querschnitt entsprechend Fig. 2 mit dem Rohling in einem ersten Bearbeitungsschritt,
- Fig. 4: einen Zwischenschritt in der Bearbeitung des Rohlings in der Darstellung gemäß den Fig. 2 und 3,
- Fig. 5: einen Schnitt durch den fertig bearbeiteten Stützring,
- Fig. 6: einen Fig. 5 entsprechenden Schnitt mit einer Hilfsvorrichtung zur Kalibrierung des Zentrierdurchmessers der spanlos umgeformten Kragen des Stützrings, und
- Fig. 7: eine Fig. 5 entsprechende Darstellung des Querschnitts eines Stützringes des Standes der Technik.

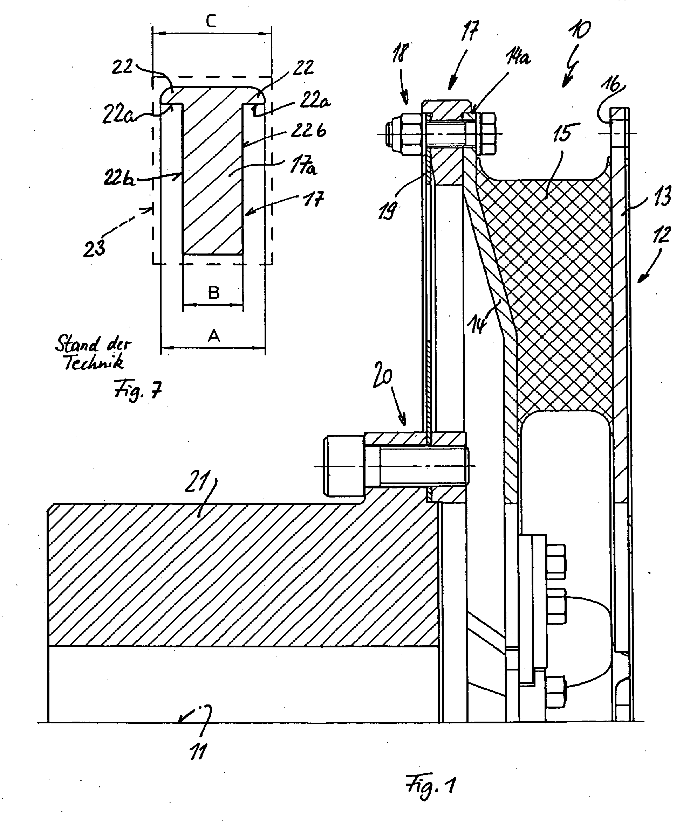

In Fig. 1 ist eine elastische Wellenkupplung nach dem Oberbegriff des Anspruchs 1 insgesamt mit der Bezugsziffer 10 bezeichnet. Die Rotationsachse der Wellenkupplung 10, von der nur eine Hälfte längs geschnitten ist, ist mit 11 bezeichnet.

Die Wellenkupplung 10 umfasst mehrere, d.h., mindestens zwei Kupplungs-Segmente 12, die jeweils zwei Segmentplatten 13 und 14 umfassen, an deren Innenseiten ein segmentförmiger gummielastischer Körper 15 als elastisches Kupplungselement anvulkanisiert ist. Die Mehrzahl der in Fig. 1 rechts gezeigten äußeren Segmentplatten 13 kann z.B. an das nicht dargestellte Schwungrad eines Dieselmotors angeschraubt werden. Die entsprechenden Bohrungen für Schraubbefestigungsmittel sind mit 16 bezeichnet. Im übrigen werden die Kupplungs-Segmente 12 auf der Seite der in Fig. 1 inneren Segmentplatten 14 von einem Stützring 17 zusammengehalten und mit ihrem äußeren Umfang 14a zentriert gehalten. Zur Befestigung dienen Verschraubungen 18, die beim Ausführungsbeispiel auf der den Kupplungs-Segmenten 12 abgewandten Seite noch eine Kupplungsmembran 19, wiederum mit ihrem Außenumfang zentriert, am Stützring 17 festlegen.

Der Vollständigkeit halber sei des weiteren erwähnt, dass die ringscheibenförmige Membran 19 mittels einer Verschraubungsanordnung 20 an einer mit 21 bezeichneten Nabe angeschlossen sind, die z.B. mit einer nicht dargestellten Welle drehfest zu verbinden ist, mit der beispielsweise ein Generator angetrieben wird.

Wie ersichtlich, dient ein Stützring 17 zum stabilisierten Zusammenhalt der wenigstens zwei, häufig auch drei oder vier oder noch mehr Segmente 12 einer Kupplung 10 sowie zu deren gemeinsamer Radialzentrierung. Bei einer Kupplung 10 der in Fig. 1 dargestellten Art, also einer Membrankupplung, dient der Stützring 17 des weiteren zum radial zentrierten Anschluss der Membran 19.

Ein solcher Stützring 17 ist ein hochpräzises Bauteil und bedarf einer recht aufwendigen Bearbeitung.

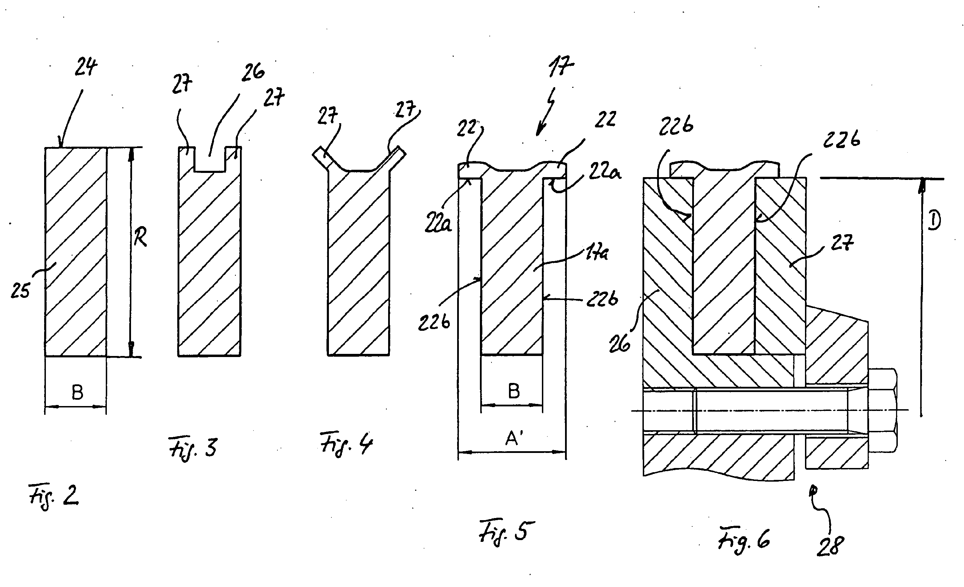

Die bisher gängigen Arbeitsschritte seien mit Bezugnahme auf Fig. 7, die den Stand der Technik zeigt, wie folgt erläutert:
Zunächst sei erwähnt, dass Fig. 7 (wie auch des weiteren die Fig. 2 bis 6) in etwas vergrößerter Darstellung den Querschnitt eines Stützrings 17 etwa entsprechend Fig. 1 zeigen. Es handelt sich hier also auch um einen Halblängsschnitt durch einen solchen Stützring 17, bzw. um einen Querschnitt durch einen Ringabschnitt desselben.
Ein Stützring 17 weist entsprechend Fig. 7 einen im wesentlich flachrechteckigen Hauptquerschnitt 17a auf und an der Außenseite des Querschnitts 17a zumindest zu einer, beim Ausführungsbeispiel jedoch zu beiden axialen Seiten sich weg erstreckende Kragen 22. Die Innenflächen 22a der Kragen 22 stellen radiale Zentrierflächen bereit, und zwar - bezogen auf das in Fig. 1 dargestellte Ausführungsbeispiel der Kupplung 10 - zur Zentrierung der Umfangsflächen 14a der Segmente 14 sowie andererseits zur Zentrierung der Außenumfangsfläche der Membran 19. Die in Axialrichtung weisenden Ringflächen 22b bilden die Anlageflächen für die Segmentplatte 14 bzw. die Membran 19.

Herkömmlicherweise wird das in Fig. 7 ersichtliche Profil für den Stützring 17 durch Walzen erzeugt, ausgehend von einem Ringkörper mit etwa dem mit gestrichelten Linien angedeuteten Querschnitt 23 der Breite C. Das Rohprofil ist sodann durch Drehen, Fräsen und gegebenenfalls Schleifen in die endgültige Form zu bringen, bis der Querschnitt mit der Breite B im Bereich des Hauptkörpers 17a und der Breite A im Bereich der Kragen 22 entstanden ist.

Diese recht aufwendige Herstellungsprozedur will die vorliegende Erfindung vermeiden, und sie erzielt dies durch im wesentlichen spanlose Umformung eines vorzugsweise mittels Laserschneiden aus einem Stahlblech geschnittenen Ringkörpers, dessen Querschnitt Fig. 2 zeigt. Dieser Querschnitt ist flachrechteckig mit der Breite B, die der Breite des fertigen Stützrings 17 entspricht und mit einer radialen Erstreckung R, die etwas größer ist als die radiale Erstreckung des fertigen Stützrings 17.

Unter Bezugnahme auf die Fig. 4 bis 6 kann der Fertigungsablauf eines erfindungsgemäßen Gegenstandes etwa wie folgt vonstatten gehen:
Zunächst wird in die Außenumfangsfläche 24 des in Fig. 2 mit 25 bezeichneten Rohlings eine umlaufende Nut 26 eingestochen. Es entstehen jeweils außenseitig der umlaufenden Nut 26 zwei umlaufende Flansche 27. Mittels geeigneter spanloser Formverfahren, z.B. auf einer Drückmaschine, werden diese Flansche 27 nun nach auswärts verdrängt, bis sie, ausgehend von Fig. 3, um etwa 90° nach außen umgeformt sind. Dieser Zustand ist in Fig. 5 dargestellt.

Fig. 5 zeigt einen Querschnitt durch den fertigen Stützring 17 mit seinen beiden, aus den Flanschen 27 entstandenen Kragen 22. Die Breite B des Hauptkörpers des fertigen Stützrings 17 ist im wesentlichen identisch mit der Breite B des Rohlings 25, das Maß A' entspricht im wesentlichen dem Sollmaß A, wie es bereits anhand von Fig. 7 erwähnt worden ist. Um dieses Maß zu erhalten, ist es natürlich wichtig, den Querschnitt der in die Umfangsfläche 24 des Rohlings 25 einzustechenden Nut 26 entsprechend auszulegen.

Um auf einfache Weise gewährleisten zu können, dass die Innenflächen 22a der Kragen 22 ihre präzise zentrierende Funktion für Segmentplatten 14 und/oder für eine Membran 19 wahrnehmen können, ist entsprechend Fig. 6 vorgesehen, dass man an die Flächen 22b des Hauptkörpers 17a Schablonen 26, 27 anlegt, deren Außendurchmesser D dem gewünschten radialen Zentriermaß des Stützrings 17 entspricht. Das Anlegen der Schablonen 26 und 27 geschieht, bevor die Flansche 22 in ihre endgültige rechtwinklige Lage abgebogen worden sind.

Bei dem in Fig. 6 dargestellten Ausführungsbeispiel sind die ringförmigen Schablonen 26 und 27 Bestandteil einer einfachen, insgesamt mit 28 bezeichneten Spannvorrichtung.

## Patentansprüche

1. Verfahren zur Herstellung einer drehelastische Wellenkupplung (10) zur Verbindung eines antreibenden Aggregats wie Dieselmotorschwungrad an der einen Kupplungshälfte mit einem angetriebenen Aggregat wie Getriebe oder Generator an der anderen Kupplungshälfte, wobei die im wesentlichen ringförmige Kupplung (10) aus in Umfangsrichtung voneinander beabstandeten Segmenten (12) zusammengesetzt ist, die jeweils einen gummielastischen Kupplungskörper (15) und axial außenseitig daran anvulkanisierte Segmentplatten (13, 14) umfassen, und wobei die Segmente (12) an einem gemeinsamen Stützring (17) befestigbar bzw. befestigt sind, der an seiner Peripherie zumindest einen zu einer Axialseite weisenden umlaufenden Kragen (22) aufweist, **dadurch gekennzeichnet, dass** der Kragen (22) des Stützrings (17) im wesentlichen spanlos aus der Außenumfangsfläche (24) eines im Querschnitt flachrechteckigen Ringkörpers (25) herausgeformt ist.

2. Verfahren nach Anspruch 1, **dadurch gekennzeichnet, dass** der Stützring (17) an seinen beiden Axialseiten jeweils einen Kragen (22) aufweist und die beiden Kragen (22), ausgehend von einem im wesentlichen mittigen Einschnitt (26) in der Peripherie des Stützrings (17), zu beiden Seiten hin nach auswärts verformt sind.

3. Verfahren nach Anspruch 1 oder 2, **dadurch gekennzeichnet, dass** das Ausformen des wenigstens einen Kragens (22) gegen eine Schablone (26; 27) mit einem einen Zentrierdurchmesser definierenden Außendurchmesser (D) erfolgt.

4. Verfahren nach einem der Ansprüche 1 bis 3, **dadurch gekennzeichnet, dass** der im Querschnitt flachrechteckige Ringkörper (25), aus dem der Stützring (17) geformt ist, mittels Laserschneiden aus einer Stahlblechplatte ausgeschnitten ist.

5. Verfahren nach einem der Ansprüche 1 bis 4, **dadurch gekennzeichnet, dass** die Außenflächen (22a, 22b) des Stützrings (17) mit Ausnahme der Außenflächen des Kragens bzw. der Kragen (22) im wesentlichen unbearbeitet bleiben.

## Claims

1. Method of manufacturing a flexible shaft coupling (10) for the connection of a driving unit such as a diesel engine flywheel on the one coupling half to a driven unit such as a transmission or generator on the other coupling half, wherein the substantially annular coupling (10) is composed of segments (12), which are spaced apart from one another in peripheral direction and comprise in each case a rubber-elastic coupling body (15) having segment plates (13, 14) attached by vulcanization to the axially outer side thereof, and wherein the segments (12) are fastenable and/or fastened to a common support ring (17), which has on its periphery at least one circumferential collar (22) directed towards an axial side, **characterized in that** the collar (22) of the support ring (17) is formed substantially without cutting from the outer peripheral surface (24) of an, in cross section flat rectangular, annular body (25).

2. Method according to claim 1, **characterized in that** the support ring (17) has on each of its two axial sides a collar (22) and the two collars (22), starting from a substantially central notch (26) in the periphery of the support ring (17), are deformed out to both sides.

3. Method according to claim 1 or 2, **characterized in that** the outward forming of the at least one collar (22) is effected against a template (26; 27) having an outside diameter (D) that defines a centring diameter.

4. Method according to one of claims 1 to 3, **characterized in that** the, in cross section flat rectangular, annular body (25), from which the support ring (17) is formed, is cut out of a sheet steel plate by means of laser cutting.

5. Method according to one of claims 1 to 4, **characterized in that** the outer surfaces (22a, 22b) of the support ring (17) with the exception of the outer surfaces of the collar and/or collars (22) remain substantially unmachined.

## Revendications

1. Procédé de fabrication d'un accouplement d'arbre (10) à élasticité en torsion, pour la liaison d'un agrégat menant tel qu'un volant d'inertie de moteur Diesel sur une première moitié d'accouplement, à un agrégat mené tel qu'une boîte de vitesses ou un générateur, sur l'autre moitié d'accouplement, l'accouplement (10) sensiblement en forme d'anneau étant composé de segments (12) espacés les uns des autres en direction périphérique, comprenant chacun un corps d'accouplement (15) ayant l'élasticité du caoutchouc et des plaques de segment (13, 14) rapportées par vulcanisation axialement extérieurement sur celui-ci, et les segments (12) étant susceptibles d'être fixés ou étant fixés sur un anneau de soutien (17) commun présentant sur sa périphérie au moins une collerette (22) de pourtour tournée vers un côté axial, **caractérisé en ce que** la collerette (22) de l'anneau de soutien (17) est formé, pratiquement sans enlèvement de copeaux, à partir de la surface périphérique extérieure (24) d'un corps annulaire (25) à section en rectangle plat.

2. Procédé selon la revendication 1, **caractérisé en ce que** l'anneau de soutien (17) présente, sur chacun de ses deux côtés axiaux, une collerette (22), et les deux collerettes (22) sont formées vers l'extérieur, des deux côtés, en partant d'une entaille (26) sensiblement centrale réalisée dans la périphérie de l'anneau d'appui (17).

3. Procédé selon la revendication 1 ou 2, **caractérisé en ce que** le formage de la au moins une collerette (22) s'effectue contre un gabarit (26 ; 27) ayant un diamètre extérieur (D) définissant un diamètre de centrage.

4. Procédé selon l'une des revendications 1 à 3, **caractérisé en ce que** le corps annulaire (25) à section en rectangle plat, d'où est formé l'anneau d'appui (17), est découpé d'une plaque en tôle d'acier, par découpage au laser.

5. Procédé selon l'une des revendications 1 à 4, **caractérisé en ce que** les faces extérieures (22a, 22b) de l'anneau d'appui (17) restent pratiquement non usinées, à l'exception des faces extérieures de la collerette ou des collerettes (22).
